# EUROPEAN PATENT APPLICATION

(11) **EP 3 091 377 A1**
(43) Date of publication of application: **09.11.2016**
(21) Application number: 16168391.7
(22) Date of filing: 04.05.2016
(51) Int. Cl.: G02B 5/00, B64G 1/36, G02B 27/00

(54) **ADDITIVELY MANUFACTURED LIGHT SHADE**

(30) Priority: 04.05.2015 US 201514703250
(71) Applicant: Goodrich Corporation, Charlotte, NC 28217 (US)
(72) Inventor: RAPPOPORT, William, Weston, CT 06883 (US); REES, Christopher, Ridgefield, CT 06877 (US); SMITH, Brian J., Maynard, MA 01754 (US)
(74) Representative: Hall, Matthew Benjamin

(57) **Abstract**

A light shade (100;200;303;400) for an optical system (300) includes a light tube (101;401) extending in a longitudinal direction, the light tube including an optical end (103) defining an optical opening (103a) and an exposure end (105) defining an exposure opening (105a). The light shade includes at least one baffle (107;207;407) extending radially inward from an inner surface of the light tube. The at least one baffle is additively manufactured with the light tube.

## Description

### BACKGROUND

### 1. Field

The present disclosure relates to optical systems, more specifically to light shades for optical systems.

### 2. Description of Related Art

Light shades with baffles are used in optical systems to minimize the stray light that can reach the focus of an optical system. Traditional light shades with baffles for star trackers and other mid-size optical systems are manufactured by machining a solid blank of aluminum to the desired shape. The bulk of the material is machined away, typically leaving only a thin cylindrical, oval, or conical shell with interior vanes and an attachment flange. Only about 3% of the mass of the original blank is retained in the final product. Accordingly, traditional processes are quite wasteful. Moreover, there is a limit to the aspect ratio of interior baffles because machining will fracture the baffles if they are too thin. Also, machining the baffles limits the shape of each baffle to simple shapes (e.g., substantially flat).

Such conventional methods and systems have generally been considered satisfactory for their intended purpose. However, there is still a need in the art for thinner, lighter, and more complex light shades with baffles. The present disclosure provides a solution for this need.

### SUMMARY

In accordance with at least one aspect of this disclosure, a light shade for an optical system includes a light tube extending in a longitudinal direction, the light tube including an optical end defining an optical opening and an exposure end defining an exposure opening. The light shade includes a plurality of baffles extending radially inward from an inner surface of the light tube. The baffles are additively manufactured with the light tube.

The light tube can include a tapered shape such that the optical opening is narrower than the exposure opening. For example, the tapered shape can be a conical shape. The baffles can have a thickness of less than about 0.01 inches (about 0.25 mm) in the longitudinal direction.

The light tube can include a mounting flange configured to mount the light shade to an optical system. The mounting flange can be defined on an outer surface of the light tube. The mounting flange can be defined near the optical end.

The baffles can form a series of concentrically aligned circles of reducing diameter from the exposure end to the optical end. In certain embodiments, the baffles can form non-circularly symmetric openings. For example, the non-circularly symmetric openings can be rectangular, ovular, or any other suitable non-annularly formable shape.

In certain embodiments, the baffles can form at least one circularly symmetric opening and at least one non-circularly symmetric opening along the length of the light shade. In certain embodiments, the at least one circularly symmetric opening can be defined near the optical end and the at least one non-circularly symmetric opening can be defined near the exposure end.

At least one of the baffles can include at least one of a varying thickness, varying size, varying radial length, varying cross-sectional profile, varying shape, varying angle of radial extension relative to the inner surface, or a divot defined therein.

In accordance with at least one aspect of this disclosure, an optical system can include an imaging device including a lens and a light shade as described above operatively disposed around the lens.

In accordance with at least one aspect of this disclosure, an additively manufacture light shade includes a light tube extending in a longitudinal direction, the light tube including an optical end defining an optical opening and an exposure end defining an exposure opening, and a baffle extending radially inward from an inner surface of the light tube, wherein the baffle is additively manufactured with the light tube, wherein the baffle includes at least one of a varying thickness, varying size, varying radial length, varying cross-sectional profile, varying shape, varying angle of radial extension relative to the inner surface, or a divot defined therein. The light shade may include any of the above-mentioned optional features.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a front perspective view of an embodiment of a light shade in accordance with this disclosure;
Fig. 1B is a rear perspective view of the light shade of Fig. 1A;
Fig. 2 is a perspective view of an embodiment of a light shade in accordance with this disclosure;
Fig. 3 is a perspective view of an embodiment of an optical system in accordance with this disclosure;
Fig. 4A is a perspective view of another embodiment of a light shade in accordance with this disclosure;
Fig. 4B is a plan view of the embodiment of Fig. 4A;
Fig. 4C is a cross-sectional view of the embodiment of Fig. 4A taken along line 4C-4C as shown in Fig. 4B;
Fig. 4D is a cross-sectional view of the embodiment of Fig. 4A taken along line 4D-4D as shown in Fig. 4B;
Fig. 4E is an exploded view of the embodiment of Fig. 4A, showing light shade exploded into quadrants in a top plan view and also shown with each quadrant illustrated in a side elevational view adjacent to each respective top plan view of each quadrant; and
Fig. 4F is an exploded view of the embodiment of Fig. 4A, showing light shade exploded into quadrants in a bottom plan view and also shown with each quadrant illustrated in a side elevational view adjacent to each respective bottom plan view of each quadrant.

### DETAILED DESCRIPTION

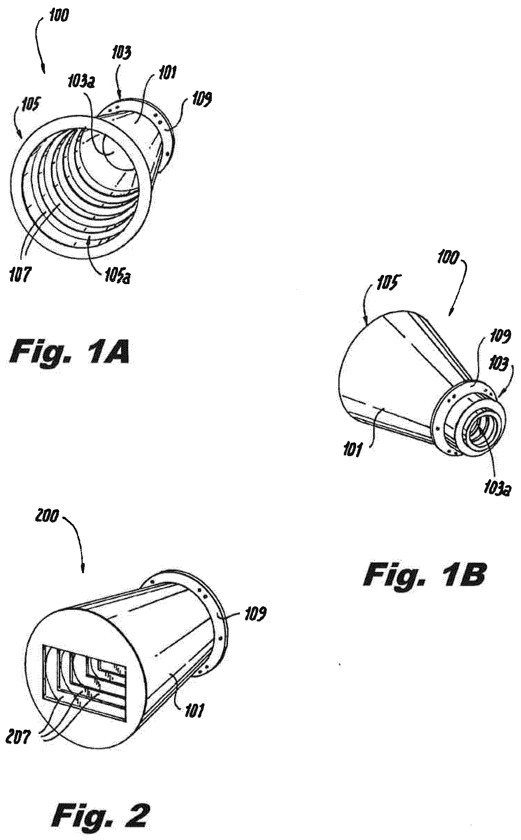

Reference will now be made to the drawings wherein like reference numerals identify similar structural features or aspects of the subject disclosure. For purposes of explanation and illustration, and not limitation, an illustrative view of an embodiment of a light shade 100 in accordance with the disclosure is shown in Figs. 1A and 1B and is designated generally by reference character 100. Other embodiments and/or aspects of this disclosure are shown in Figs. 2-4F. The systems and methods described herein can be used to provide lighter and/or more efficient light shades for optical systems.

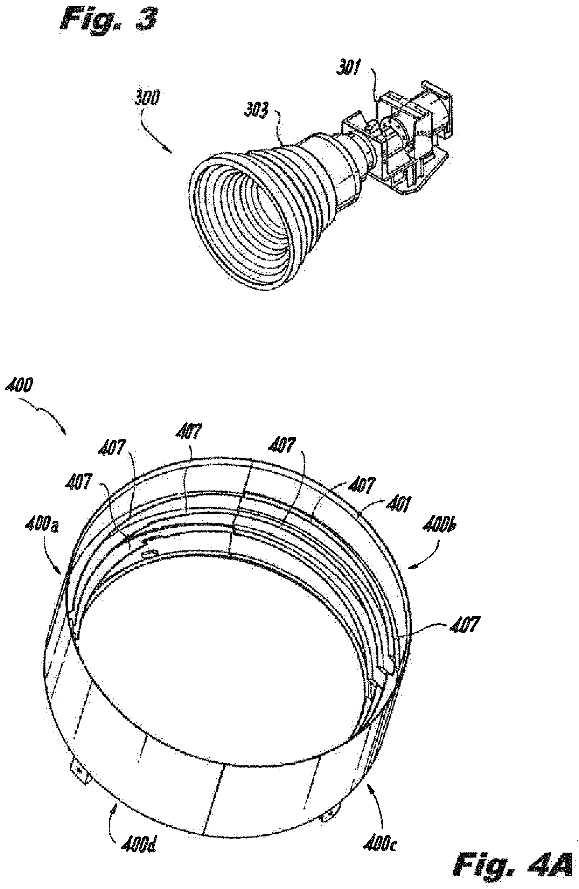

Referring to Figs. 1A and 1B, a light shade 100 for an optical system (e.g., system 300 as shown in Fig. 3) includes a light tube 101 extending in a longitudinal direction. The light tube 101 includes an optical end 103 defining an optical opening 103a and an exposure end 105 defining an exposure opening 105a.

The optical end 103 is configured to be in communication with a lens of an optical device (e.g., a suitable camera, telescope, or the like). The exposure end 105 is configured to allow light (of any suitable wavelength) to enter the light tube 101 from predetermined directions based on the dimensions of the light tube 101.

As shown, the light tube 101 can include a tapered shape such that the optical opening 103a is narrower than the exposure opening 105a. For example, the tapered shape can be a conical shape. The light tube 101 can include any suitable cross-sectional shape as well (e.g., circular, ovular, rectilinear).

The light tube 101 can include a mounting flange 109 configured to mount the light shade 100 to an optical system. As shown, the mounting flange 109 can be defined on an outer surface of the light tube 101 and/or disposed near the optical end 103. Any other suitable location for the mounting flange 109 is contemplated herein.

The light shade 100 includes a plurality of baffles 107 extending radially inward from an inner surface of the light tube 101. The baffles 107 are additively manufactured with the light tube 101. For example, the baffles 107 can be additively manufactured along with the light tube 101 using laser powder bed fusion or any other suitable method (e.g., electron beam melting, direct metal laser sintering).

The baffles 107 can be additively manufactured including any suitable materials (e.g., AlSi10Mg and/or AlSi9Cu3, Ti, TI-6A1-4V). Ti is not traditionally used to make light shades because it is difficult to machine and is more expensive than Al. Although Ti is denser than Al, it is stronger, and additively manufacturing the light shade 107 allow thinner wall sections to be fabricated than traditionally possible, resulting in equal or possibly reduced mass and/or improved optical performance. It is contemplated additional machining processes can be employed to achieve finished knife edges on the inside diameters of one or more of the baffles 107. Any other suitable traditional methods (e.g., casting, machining) to manufacture the light shade 101 and/or baffles 107 are contemplated herein.

The baffles 107 can have a thickness of less than about 0.01 inches (about 0.25 mm) in the longitudinal direction. In certain cases, such thin baffles 107 are not achievable via traditional methods of manufacturing because, for example, machining the baffles 107 to such aspect ratios leads to fractured baffles 107. Any other suitable thickness or aspect ratio is contemplated herein.

In certain embodiments, the baffles 107 can form a series of concentrically aligned circles of reducing diameter from the exposure end 105 to the optical end 104. Referring to Fig. 2, in certain embodiments, the baffles 207 of light shade 200 can be additively manufactured to form non-circularly symmetric openings. For example, one or more of the non-circularly symmetric openings can be rectangular as shown in Fig. 2. It is contemplated that the non-circularly symmetric openings can be any other suitable non-annularly formable shape (e.g., ovular).

The non-circularly symmetric openings can be defined to match an active sensor area of an imaging device to increase stray light performance, for example. In certain embodiments, the baffles 207 can form one or more circular openings near the optical end 104 and form one or more rectangular openings at the exposure end 105.

It is also contemplated that the baffles 107, 207 and/or any other suitable portions of light shades 100, 200 as described above, can include other optical features additively manufactured therewith. For example, it is contemplated that one or more of the baffles 107, 207 can include texturing (not shown) to increase the surface area of the baffles 107, 207. This can enhance light capture and/or reduce reflection of light for each baffle 107, 207.

Referring to Fig. 3, in accordance with at least one aspect of this disclosure, an optical system 300 can include an imaging device 301 including a lens (not shown) and a light shade 303 similar to one or more embodiments as described above operatively disposed around the lens. The imaging device 301 can include any suitable camera, scope, telescope, or the like.

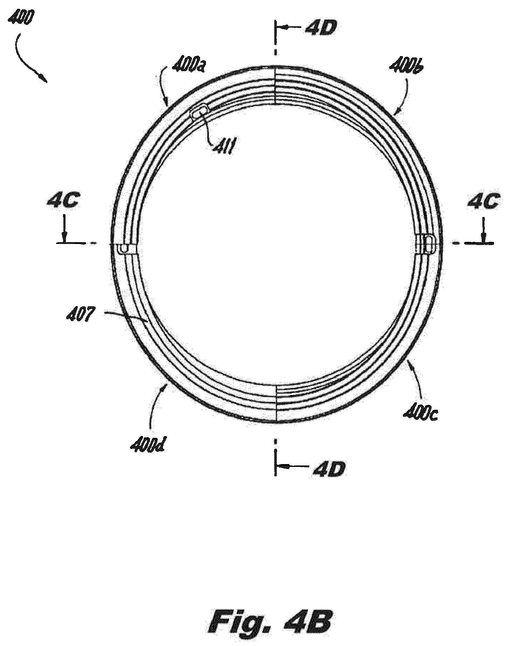

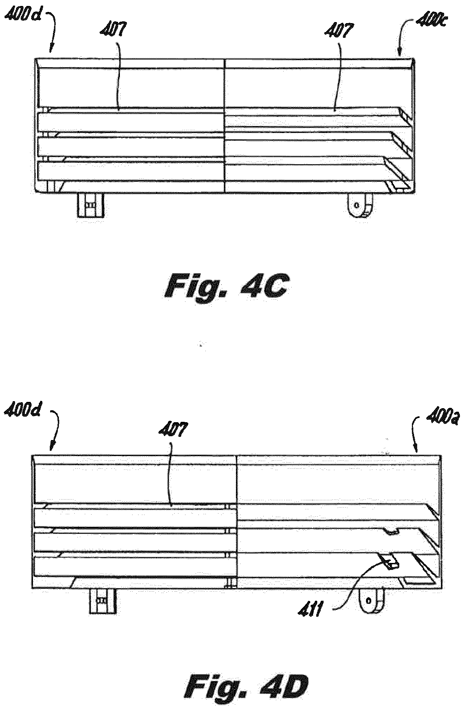

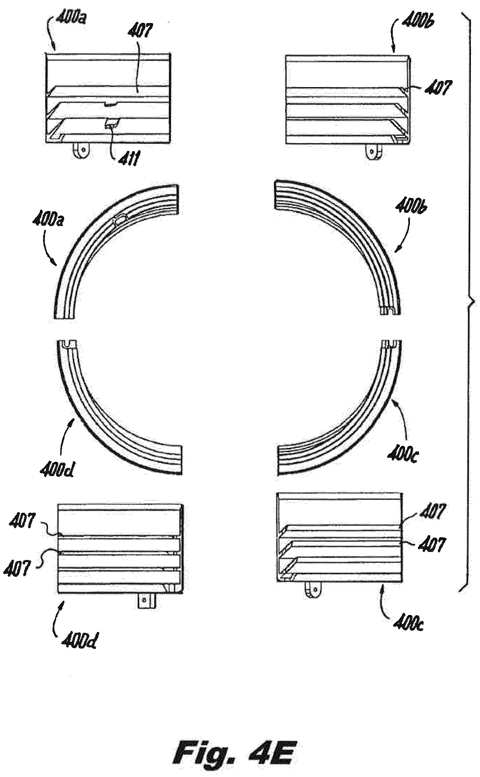

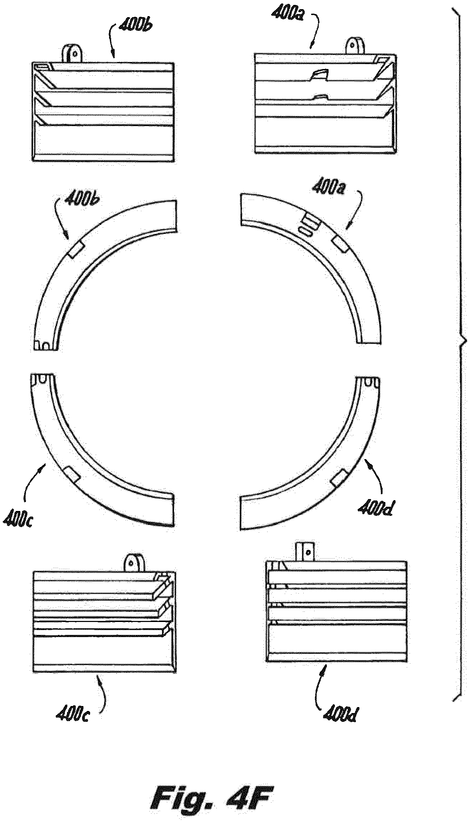

Referring now to Figs. 4A-4F, another embodiment of a light shade 400 is shown. The light shade 400 can includes four quadrants 400a, 400b, 400c, 400d which, when together, define light tube 401 and a plurality of baffles 407. The four quadrants 400a, 400b, 400c, 400d can be additively manufactured as one piece or can be attached together in any other suitable manner.

At least one of the baffles 407 can include at least one of a varying thickness, varying size, varying radial length, varying cross-sectional profile, varying shape, varying angle of radial extension relative to the inner surface, or a divot 411 defined therein. For example, at least one of the baffles 407 in quadrant 400a can include a triangular cross-sectional shape that is angled relative to the light tube 401 and one or more divots 411. At least one of the baffles 407 in quadrant 400b can include a trapezoidal cross-sectional shape that is angled relative to the light tube 401. At least one of the baffles 407 in quadrant 400c can include a trapezoidal cross-sectional shape, similar or different from the quadrant 400b, that is angled relative to the light tube 401. At least one of the baffles 407 in quadrant 400c can include a rectilinear cross-sectional shape that is angled relative to the light tube 401.

As shown, the baffles 407 can be different in each of the quadrants 400a, 400b, 400c, 400d. However, it is contemplated that the baffles 407 can vary in any suitable manner.

The methods and systems of the present disclosure, as described above and shown in the drawings, provide for light shades with superior properties including, for example, improved optical performance, reduced weight, reduced waste in manufacturing. While the apparatus and methods of the subject disclosure have been shown and described with reference to embodiments, those skilled in the art will readily appreciate that changes and/or modifications may be made thereto without departing from the scope of the subject disclosure.

The following clauses set out features of the embodiment which may or may not presently be claimed in this application, but which may form basis for future amendment or a divisional application.
1. A light shade for an optical system, comprising: a light tube extending in a longitudinal direction, the light tube including an optical end defining an optical opening and an exposure end defining an exposure opening; and a plurality of baffles extending radially inward from an inner surface of the light tube, wherein the baffles are additively manufactured with the light tube.
2. The light shade of clause 1, wherein the light tube includes a tapered shape such that the optical opening is narrower than the exposure opening.
3. The light shade of clause 2, wherein the tapered shape is a conical shape.
4. The light shade of clause 1, wherein the baffles have a thickness of less than about 0.01 inches (about 0.25 mm) in the longitudinal direction.
5. The light shade of clause 1, wherein the light tube includes a mounting flange configured to mount the light shade to an optical system.
6. The light shade of clause 5, wherein the mounting flange is defined on an outer surface of the light tube.
7. The light shade of clause 6, wherein the mounting flange is defined near the optical end.
8. The light shade of clause 1, wherein the baffles form a series of concentrically aligned circles of reducing diameter from the exposure end to the optical end.
9. The light shade of clause 1, wherein the baffles form at least one non-circularly symmetric opening.
10. The light shade of clause 9, wherein the baffles form at least one circularly symmetric opening and at least one non-circularly symmetric opening along the length of the light shade.
11. The light shade of clause 10, wherein the at least one circularly symmetric opening is defined near the optical end and the at least one non-circularly symmetric opening is defined near the exposure end.
12. The light shade of clause 9, wherein the non-circularly symmetric openings are rectangular.
13. The light shade of clause 9, wherein the non-circularly symmetric openings are ovular.
14. The light shade of clause 1, wherein at least one of the baffles includes at least one of a varying thickness, varying size, varying radial length, varying cross-sectional profile, varying shape, varying angle of radial extension relative to the inner surface, or a divot defined therein.
15. An optical system, comprising: an imaging device including a lens; and a light shade operatively disposed around the lens, comprising: a light tube extending in a longitudinal direction, the light tube including an optical end defining an optical opening at the lens of the imaging device, and an exposure end defining an exposure opening; and a plurality of baffles extending radially inward from an inner surface of the light tube, wherein the baffles are additively manufactured with the light tube.
16. The system of clause 15, wherein the light tube includes a tapered shape such that the optical opening is narrower than the exposure opening.
17. The system of clause 16, wherein the tapered shape is a conical shape.
18. The system of clause 15, wherein the baffles have a thickness of less than about 0.01 inches (about 0.25 mm) in the longitudinal direction.
19. The system of clause 15, wherein the light tube includes a mounting flange configured to mount the light shade to an optical system.
20. An additively manufacture light shade, comprising: a light tube extending in a longitudinal direction, the light tube including an optical end defining an optical opening and an exposure end defining an exposure opening; and a baffle extending radially inward from an inner surface of the light tube, wherein the baffle is additively manufactured with the light tube, wherein the baffle includes at least one of a varying thickness, varying size, varying radial length, varying cross-sectional profile, varying shape, varying angle of radial extension relative to the inner surface, or a divot defined therein.

## Claims

1. A light shade (100;200;303;400) for an optical system (300), comprising:
a light tube (101;401) extending in a longitudinal direction, the light tube including an optical end (103) defining an optical opening (103a) and an exposure end (105) defining an exposure opening (105a); and
a plurality of baffles (107;207;407) extending radially inward from an inner surface of the light tube, wherein the baffles are additively manufactured with the light tube.

2. The light shade (100;200;303;400) of claim 1, wherein the light tube includes a tapered shape such that the optical opening (103a) is narrower than the exposure opening (105a).

3. The light shade (100;200;303;400) of claim 2, wherein the tapered shape is a conical shape.

4. The light shade (100;200;303;400) of claim 1, 2 or 3, wherein the baffles (107;207;407) have a thickness of less than about 0.01 inches (about 0.25 mm) in the longitudinal direction.

5. The light shade (100;200;303;400) of any preceding claim, wherein the light tube includes a mounting flange (109) configured to mount the light shade to an optical system (300).

6. The light shade (100;200;303;400) of claim 5, wherein the mounting flange (109) is defined on an outer surface of the light tube (101,401), preferably wherein the mounting flange is defined near the optical end (103).

7. The light shade (100) of any preceding claim, wherein the baffles (107) form a series of concentrically aligned circles of reducing diameter from the exposure end (105) to the optical end (103).

8. The light shade (200) of any preceding claim, wherein the baffles (207) form at least one non-circularly symmetric opening.

9. The light shade (200) of claim 8, wherein the baffles (207) form at least one circularly symmetric opening and at least one non-circularly symmetric opening along the length of the light shade.

10. The light shade (200) of claim 9, wherein the at least one circularly symmetric opening is defined near the optical end (103) and the at least one non-circularly symmetric opening is defined near the exposure end (105).

11. The light shade (200) of claim 8, 9 or 10, wherein the non-circularly symmetric openings are rectangular.

12. The light shade (200) of claim 8, 9 or 10, wherein the non-circularly symmetric openings are ovular.

13. The light shade (400) of any preceding claim, wherein at least one of the baffles (407) includes at least one of a varying thickness, varying size, varying radial length, varying cross-sectional profile, varying shape, varying angle of radial extension relative to the inner surface, or a divot defined therein.

14. An optical system (300), comprising:
an imaging device (301) including a lens; and
the light shade (100;200;303;400) of any preceding claim operatively disposed around the lens, wherein the optical opening (103a) is at the lens of the imaging device.

15. An additively manufactured light shade (400), comprising:
a light tube (401) extending in a longitudinal direction, the light tube including an optical end (103) defining an optical opening (103a) and an exposure end (105) defining an exposure opening (105a); and
a baffle (407) extending radially inward from an inner surface of the light tube, wherein the baffle is additively manufactured with the light tube, wherein the baffle includes at least one of a varying thickness, varying size, varying radial length, varying cross-sectional profile, varying shape, varying angle of radial extension relative to the inner surface, or a divot defined therein.
